# EUROPEAN PATENT SPECIFICATION

(11) **EP 0 787 661 B1**
(45) Date of publication and mention of the grant of the patent: **25.08.1999**
(21) Application number: 97301304.8
(22) Date of filing: 07.03.1997
(51) Int. Cl.: B65D 83/00, B65D 81/32, B05C 17/005

(54) **Reusable dispenser**
Wiederverwendbare Abgabevorrichtung
Appareil distributeur réutilisable

(30) Priority: 19.07.1995 GB 9514808
(43) Date of publication of application: 06.08.1997
(62) Divisional of application: 96304783.2
(73) Proprietor: Exchem plc, London WC1A 1NU (GB)
(72) Inventor: Ewings, Paul Francis Reginald, Ripley, Derbyshire DE5 3JP (GB); Ball, Malcolm David, Lichtfield, Staffordshire WS14 9SR (GB)
(74) Representative: Pacitti, Pierpaolo A.M.E.

(56) References cited:
- EP-A- 0 441 538
- EP-A- 0 541 972
- DE-A- 1 805 110
- DE-U- 8 530 077
- DE-U- 9 206 256

## Description

This Application has been divided from our co-pending European Patent Application No 96304783.2 which relates to cartridge systems used in dispensing devices suitable for dispensing inter- reactive multi-component compositions. Many such compositions exist and will be well known to people skilled in the art; the compositions comprising reactive components that may be produced as a liquid or paste including, and by way of example only, polyester, vinyl ester, epoxide, polyurethane and so on.

Cartridges containing multi-component compositions are known in various forms. Generally they comprise two or more separate compartments, each housing a respective component. These components, in use, are extruded or otherwise expelled through an orifice in their respective compartments into a static mixing device, where they are caused to mix together.

Once such dispensing device is shown in European Patent Application No EP-A-0,541,972 which describes a dispensing device for an inner-reactive multi-component composition comprising a frangible cartridge located substantially within a guide tube and having its dispensing end passed internally through a nozzle attached to a respective end of the guide tube and its opposite end exposed to a compression means for encouraging the components towards the nozzle, in use, and a clip attached to the dispensing end externally of said nozzle to prevent the dispensing end retracting through the nozzle.

The present invention relates to a means for facilitating the dispensing of compositions, and more particularly retaining the dispensing end of such cartridges in an exposed position at the outlet of the devices.

When designing dispensing devices for use with multi-component systems consideration should be given to the need to minimise wastage. That is, it is desirable to design the dispensing device such that the majority of it may be reused and, similarly, only a minimal proportion of the device need be discarded when dispensing has been completed. In particular, it would be desirable only to discard the cartridge or housing member which houses the reactive components and possibly the nozzle or mixing head. Also, that which is discarded is preferably of only one material to assist in material recycling.

Accordingly, it is an object of the present invention to provide a dispensing device for inter-reactive multi-component compositions which offers increased flexibility and versatility in its utility, while minimising disposal wastage.

According to the present invention there is provided a dispensing device for an inter-reactive multi-component composition comprising a frangible cartridge located substantially within a guide tube and having its dispensing end passed internally through a nozzle attached to a respective end of the guide tube and its opposite end exposed to a compression means for encouraging the components towards the nozzle, in use, wherein a clip is attached to said dispensing end externally of said nozzle to prevent the dispensing end retracting through the nozzle, characterised in that the clip is provided with means for mounting a blade operable to sever the dispensing end of the cartridge. The clip may conveniently be formed by an integral moulding having two portions movable about a hinge portion to enclose the dispensing end of the cartridge.

Preferably, the guide tube provides rigid support to the cartridge, in use, and provides axial guidance to the compression means, which may be a piston.

In a particularly preferred form, the frangible cartridge comprises a bag-like flexible membrane with said dispensing end closed by a metal ring or tag.

Preferably, said means for mounting a blade comprises a slot in the clip, the dispensing device further comprising a blade frictionally engaged in the slot.

Embodiments of the invention will now be described, by way of example only, in order to give the reader a better understanding of the invention, with reference to the accompanying drawings, in which:
Fig. 1 is a cross section of part of a dispensing device in accordance with the invention;
Figs. 2A and 2B are front and plan views, respectively, of a clip according to the invention in partially assembled form; and
Fig. 2C is a view corresponding to Fig. 2B but showing an additional component in accordance with the invention.

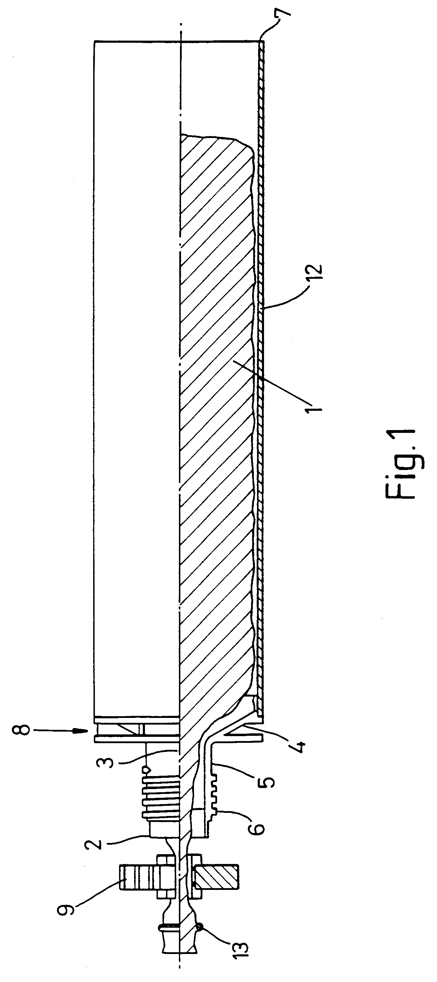

Referring to Fig. 1, a frangible cartridge 1 includes two or more compartments, each containing a respective component. The cartridge 1 is made from a flexible pliable material compatible with the components to be housed, and having some resemblance to a bag or skin. Advantageously, a single polymer or other material can be used. The cartridge is filled through an open end which is then closed with a metal ring staple or tag 13.

Each compartment within the cartridge 1 contains a respective component, but is not filled with such a component to its capacity. In other words, the full potential volume of each compartment within the cartridge 1 is not used to contain its respective component, such that there is some slack or vacant occupancy within the compartments.

The dispensing device is in the form of a caulking gun, and comprises a nozzle adaptor 2 which includes a central internal bore 3, a shoulder portion 4 and a neck 5. The exterior of the neck 5 is provided with a male threaded area 6, which is adapted to engage with internal threads provided on commercially available static mixers.

The dispensing device also includes a guide tube 12 which, in the embodiment shown, is in the form of rigid aluminium tube. The guide tube 12 can also be manufactured in any suitable material, including a plastics or metal tube, using well known techniques such as injection or blow moulding, extrusion or machining.

The tube 12 is open at both ends. One end 7 is adapted to receive a piston (not shown) slidable within the tube 12, the other end 8 being adapted to engage with the shoulder 4 of the nozzle adaptor 2.

Assembling the dispensing device is performed in the following manner.

Firstly, one end of the frangible cartridge 1 is drawn through the bore 3 within the nozzle adapter 2. As the cartridge 1 is not filled with the mixing components to its capacity, it is not difficult to simply pull the material of the cartridge 1 through the bore 3 without applying undesirable pressure to the cartridge, which might lead to a tear or rupture thereof. After the end of the cartridge 1 is threaded through the bore 3 in the adaptor 2, it is retained in such a position with the use of a retaining clip or disc 9. The clip 9 also can be made of any suitable material, including metal or plastics, and either be moulded, machined or stamped. The function of the clip 9 is to prevent the threaded (inserted) portion of the cartridge from returning through the bore 3 in the adaptor 2.

The cartridge 1 and adaptor 2 may be supplied commercially in this form, and as such, may be fitted to a standard caulking gun; the piston of the gun being suitably sized and positioned within the guide tube 12. The user then would hold the clip 9, applying sufficient tension to pull the dispensing end of the cartridge 1 slightly away from the nozzle adaptor 2, to allow it to be cut through with a knife or other implement. A static mixer (not shown) is then attached to the nozzle adaptor 2, ready to receive the components from the cut dispensing end of the cartridge 1 as pressure is applied by the piston (also not shown).

Various types of dispensing guns may be used, including even those which facilitate a reversible or shuttle-type piston action.

Once the piston has forced substantially all of the mixing components from the cartridge 1, the cartridge 1, adaptor 2 and static mixer can be discarded, while the rest of the apparatus may be reused; either for a cartridge with similar or dissimilar components or ratios.

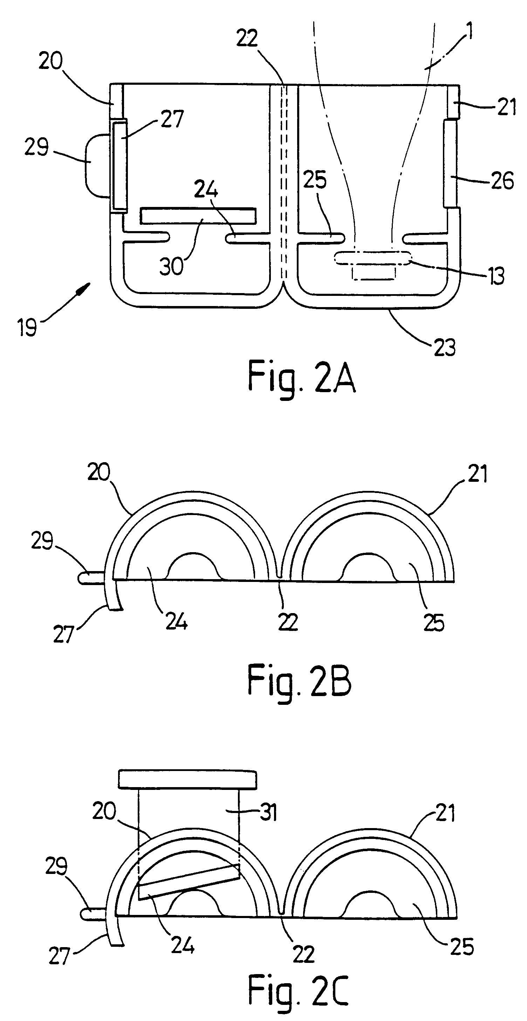

Fig. 2 shows a clip 19 according to the invention which has a slot 30 in the first portion 20. As seen in Fig. 2C, a disposable blade 31 is frictionally engaged in the slot 30 before the clip 19 is fitted to the cartridge 1. In use, the user simply depresses the blade 30 to severe the neck of the cartridge 1, and the clip 19 can then be removed and disposed of.

## Claims

1. A dispensing device for an inter-reactive multi-component composition comprising a frangible cartridge (1) located substantially within a guide tube (12) and having its dispensing end passed internally through a nozzle (2) attached to a respective end of the guide tube (12) and its opposite end exposed to a compression means for encouraging the components towards the nozzle (2), in use, wherein a clip (19) is attached to said dispensing end externally of said nozzle (2) to prevent the dispensing end retracting through the nozzle (2),
characterised in that the clip (19) is provided with means (30) for mounting a blade (31) operable to sever the dispensing end of the cartridge (1).

2. A device according to Claim 1, in which the clip (19) is formed by an integral moulding having two portions (20, 21) movable about a hinge portion (22) to enclose the dispensing end of the cartridge.

3. A device according to any preceding Claim, in which the guide tube (12) provides rigid support to the cartridge (1), in use, and provides axial guidance to the compression means.

4. A device according to any preceding Claim, in which the compression means is a piston.

5. A device according to any preceding Claim, in which the frangible cartridge (1) comprises a bag-like flexible membrane with said dispensing end closed by a metal ring or tag (13).

6. A device according to any preceding Claim, in which said means for mounting a blade comprises a slot (3) in the clip, said blade (31) being frictionally engaged in the slot.

## Patentansprüche

1. Eine Abgabevorrichtung für eine wechselseitig reagierende Mehrkomponenten-Zusammensetzung bestehend aus einer zerbrechlichen Patrone (1), die sich im wesentlichen innerhalb eines Leitrohrs (12) befindet und dessen Abgabeende durch das Innere einer Düse (2), die an dem entsprechenden Ende des Leitrohrs (12) befestigt ist,
hindurchgeleitet wird und dessen entgegengesetzte Ende einem Kompressionsmittel ausgesetzt wird, um die Komponenten zur Düse (2) hin zu fördern, wobei bei Gebrauch eine Schelle (19) am Abgabeende außerhalb der Düse (2) befestigt wird, um das Zurückziehen des Abgabeendes durch die Düse (2) hindurch zu verhindern,
dadurch gekennzeichnet, daß die Schelle (19) mit einem Mittel (30) zur Anbringung einer Klinge (31), die dazu ausgelegt ist, um das Abgabeende der Patrone (1) zu trennen, bereitgestellt wird.

2. Vorrichtung gemäß Anspruch 1, wobei die Schelle (19) aus einem integralen Formartikel gebildet wird, das zwei Abschnitte (20, 21) aufweist, die um einen Scharnierteil (22) beweglich sind, um das Abgabeende der Patrone einzuschließen.

3. Vorrichtung gemäß einem der vorhergehenden Ansprüche, wobei das Leitrohr (12) bei Gebrauch ein starrer Träger für die Patrone (1) darstellt und eine axiale Führung für das Kompressionsmittel bereitstellt.

4. Vorrichtung gemäß einem der vorhergehenden Ansprüche, wobei das Kompressionsmittel ein Kolben ist.

5. Vorrichtung gemäß einem der vorhergehenden Ansprüche, wobei die zerbrechliche Patrone (1) aus einem beutelartigen, flexiblen Membran und dem Abgabeende, das mittels eines Metallrings oder eines Zipfels (13) verschlossen ist, besteht

6. Vorrichtung gemäß einem der vorhergehenden Ansprüche, wobei das Mittel zur Anbringung einer Klinge aus einem Schlitz (3) in der Schelle besteht, wobei die Klinge (31) durch Reibung in den Schlitz eingreift.

## Revendications

1. Un dispositif pour distribuer une composition à composants multiples inter-réactifs comprenant une cartouche cassable (1) située sensiblement à l'intérieur d'un tube de guidage (12) et dont l'extrémité de distribution traverse de façon interne un ajutage (2) fixé à une extrémité respective du tube de guidage (12) et dont l'extrémité opposée est exposée à un moyen de compression pour pousser les composants vers l'ajutage (2), à l'usage, dans lequel un clip (19) est fixé à ladite extrémité de distribution à l'extérieur du dit ajutage (2) afin d'empêcher que l'extrémité de distribution ne se rétracte à travers l'ajutage (2),
caractérisé en ce que le clip (19) est muni d'un moyen (30) pour monter une lame (31) qui peut servir à couper l'extrémité de distribution de la cartouche (1).

2. Un dispositif selon la revendication 1, dans lequel le clip (19) est formé par un moulage intégral ayant deux portions (20, 21) pouvant bouger autour d'une portion charniere (22) afin d'enfermer l'extrémité de distribution de la cartouche.

3. Un dispositif selon n'importe laquelle des revendications précédentes, dans lequel le tube de guidage (12) fournit un support rigide à la cartouche (1), a l'usage, et fournit un guidage axial au moyen de compression.

4. Un dispositif selon n'importe laquelle des revendications précédentes, dans lequel le moyen de compression est un piston.

5. Un dispositif selon n'importe laquelle des revendications précédentes, dans lequel la cartouche cassable (1) comprend une membrane flexible ressemblant à un sac, dont ladite extrémité de distribution est fermée par un anneau ou avec une bride en métal (13).

6. Un dispositif selon n'importe laquelle des revendications précédentes, dans lequel ledit moyen pour monter une lame comprend une fente (3) dans le clip, ladite lame (31) étant engagée par frottement dans la fente.
